# EUROPEAN PATENT APPLICATION

(11) **EP 4 568 237 A1**
(43) Date of publication of application: **11.06.2025**
(21) Application number: 23866628.3
(22) Date of filing: 20.09.2023
(51) Int. Cl.: H04N 7/18, G08B 21/00

(54) **INFANT MONITORING APPARATUS WITH DOORBELL**

(30) Priority: 04.08.2023 CN 202322097549 U
(71) Applicant: MCD Limited, Hong Kong, NT 999077 (HK)
(72) Inventor: YUAN, Yuan, Shenzhen, Guangdong 518000 (CN)
(74) Representative: Herrero & Asociados, S.L.
(86) International application number: PCT/CN2023/120166
(87) International publication number: WO 2025/030640

(57) **Abstract**

A baby monitor working with a door phone is provided and includes a parent unit, at least one baby unit, and a door phone. Each baby unit communicates wirelessly with the parent unit separately, captures the instant status of the monitored infant, sends the instant status of the monitored infant to the parent unit; the door phone communicates wirelessly with the parent unit, the door phone may be activated based on a trigger signal to capture the information about the surroundings, send the captured information about the surroundings to the parent unit. The aforesaid embodiment makes it more convenient for the guardian to communicate with the visitor.

## Description

### CROSS REFERENCE TO RELATED APPLICATIONS

The present application claims priority to Chinese Patent Application No. 202322097549.4, filed on August 4, 2023, entitled "infant video monitor", the entire contents of which are herein incorporated by reference in their entireties.

### TECHNICAL FIELD

The present disclosure relates to the technical field of monitoring devices, in particular to a baby monitor working with a door phone.

### BACKGROUND

Newborn infants cannot live without the accompany of a guardian. Infant monitoring devices can share the companying burden of the guardian, which are welcomed by more and more families and newborn care institutions.

The infant monitoring device usually help the guardian to monitor the infant in a distance. However, taking care of the infant is very busy. Many families have door phones either in audio or video format. Busy moms or dads taking care of babies always hold parent units of a baby monitor at homes. When a guest visits, and the guardian is busy with other things and can't get away, it is not convenient for the guardian to communicate with the visitor. If the parent units can also receive audio or video message from the visitors at outside door while monitoring babies, it will be time saving and environment friendly to reduce the numbers of electronic devices at home.

Therefore, it is necessary to make it more convenient for the guardian to communicate with the visitor.

### SUMMARY

According to embodiments of the present disclosure, the present disclosure provides a baby monitor working with a door phone, which may make it more convenient for a guardian to communicate with a visitor.

In a first aspect, a baby monitor working with a door phone is offered and includes a parent unit, at least one baby unit, and a door phone. Each baby unit is configured to be capable of communicating wirelessly with the parent unit separately, and is configured to capture the instant status of the monitored infant, and send the instant status of the monitored infant to the parent unit; the door phone is configured to be capable of realizing wireless communication with the parent unit, the door phone is configured to be activated based on a trigger signal to capture the information about the surroundings, and send the captured information about the surroundings to the parent unit.

In the aforesaid embodiment, the baby unit captures the instant status of the monitored infant and sends it to the parent unit, the guardian can obtain the infant's condition through the parent unit, which is capable of reducing monitoring pressure of the guardian and improving the personal safety of the infant. The door phone is capable of communicating with the parent unit wirelessly, so the guardian can obtain the information about the surroundings such as voices and pictures of the visitor, and then the guardian can communicate with the visitor through the parent unit without going to doorways or other specific areas. Accordingly, the technical solution provided above may make it more convenient for the guardian to communicate with the visitor.

### BRIEF DESCRIPTION OF THE DRAWINGS

FIG. 1 is a block diagram of a baby monitor working with a door phone provided by some embodiments of the present disclosure.
FIG. 2 is a block diagram of a baby unit of the baby monitor working with a door phone provided by some embodiments of the present disclosure.
FIG. 3 is a block diagram of a door phone of the baby monitor working with a door phone provided by a first embodiment of the present disclosure.
FIG. 4 is a block diagram of a parent unit of the baby monitor working with a door phone provided by some embodiments of the present disclosure.
FIG. 5 is a block diagram of the door phone of the baby monitor working with a door phone provided by a second embodiment of the present disclosure.
FIG. 6 is a block diagram of a processing circuit in the door phone of the baby monitor working with a door phone provided by some embodiments of the present disclosure.
FIG. 7 is a schematic diagram of a partial circuit structure in the door phone of the baby monitor working with a door phone provided by some embodiments of the present disclosure.

### DETAILED DESCRIPTIONs

In order to make the purpose, technical solutions and advantages of the present disclosure clearer, the embodiments of the present disclosure will be further described in detail below in combination with the accompanying figures.

Normally, some infant monitoring devices are capable of capturing condition of the infant and send it to a guardian's portable terminal, which can play a role in helping the guardian to monitor the infant. However, in some scenarios, for example, the guardian is busy in breastfeeding or other household chores and cannot get away, and at which time a visitor comes to visit, the guardian is often unable to open the door, confirm the identity of the visitor or communicate with the visitor, so it may cause some trouble to the guardian.

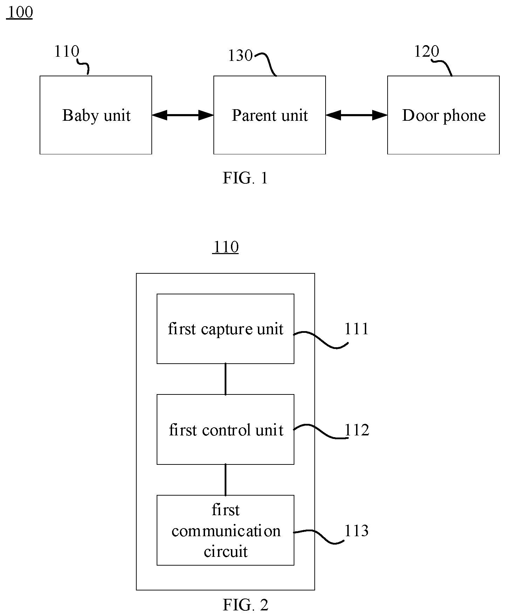

A baby monitor 100 working with a door phone is disclosed in a first aspect of the present disclosure. As shown in FIG. 1, FIG. 1 is a block diagram of a baby monitor working with a door phone provided by some embodiments of the present disclosure. Specifically, the baby monitor 100 working with a door phone includes a parent unit 130, at least one baby unit 110, and a door phone 120. Each baby unit 110 is configured to be capable of communicating wirelessly with the parent unit 130 separately, and is configured to capture the instant status of the monitored infant, and send the instant status of the monitored infant to the parent unit 130. The door phone 120 is configured to be capable of realizing wireless communication with the parent unit 130, and the door phone 120 is configured to be activated based on a trigger signal to capture the information about the surroundings, and send it to the parent unit 130.

In the aforesaid embodiment, the baby unit 110 captures the instant status of the monitored infant, and sends the instant status of the monitored infant to the parent unit 130, the guardian can obtain the infant's condition through the parent unit 130, which is capable of reducing monitoring pressure of the guardian and improving the personal safety of the infant. The door phone 120 is capable of communicating with the parent unit 130 wirelessly and sending it to the parent unit 130, so the guardian can obtain the information about the surroundings such as voices and pictures of the visitor, and communicate with the visitor through the parent unit 130 without going to doorways or other specific areas, so the technical solution provided above may make it more convenient for the guardian to communicate with the visitor.

For example, when the door phone 120 is activated, it is capable of capturing information of the surroundings, including but not limited to information such as pictures, voices and so on, and sending the information of the surroundings to the parent unit 130; a user can communicate with the door phone 120 through the parent unit 120, and send information like their own voices to the door phone 120, thereby the communication with the visitor can be realized.

The door phone 120 may be configured to be capable of receiving data signals sent by the parent unit 130 such as video data signals and/or audio data signals, therefore the user can communicate with the visitor through the door phone 120. Correspondingly, the door phone 120 may further include a speaker and/or a display, for playing audios and/or videos sent by the parent unit 130.

In some embodiments of the present disclosure, the baby unit 110 may be set near the infant to capture the instant status of the monitored infant, which including but not limited to pictures of the monitored infant, voices, environmental noise, ambient temperature, body temperature of the monitored infant, etc. The door phone 120 may be set at the area around the door to capture the information about the surroundings, which including but not limited to pictures and voices about the area around the door. The parent unit 130 may be configured to be capable of being carried by the guardian, and the parent unit 130 may be a private mobile terminal like a mobile phone, a tablet, etc. The parent unit 130 may also be other forms of mobile terminals with wireless transceiver function, which is not limited here.

In some embodiments of the present disclosure, as shown in FIG. 2, FIG. 2 is a block diagram of a baby unit of the baby monitor working with a door phone provided by some embodiments of the present disclosure. Specifically, each baby unit 110 may be configured to include a first capture unit 111, a first control unit 112, and a first communication circuit 113. The first control unit 112 may be configured to be connected to the first capture unit 111. The first communication circuit 113 may be configured to be connected to the first control unit 112. The first capture unit 111 may be configured to capture the instant status of the monitored infant. The first control unit 112 may be configured to process the captured instant status of the monitored infant and generate corresponding first capture-monitoring-data. The first communication circuit 113 may be configured to send the first capture-monitoring-data to the parent unit 130; and/or, the communication circuit 113 may be configured to receive a first control signal sent by the parent unit 130. The first control unit 112 may be configured to analyze the first control signal and control the baby unit 110 based on the analyzed first control signal.

In the above embodiments of the present disclosure, by using the baby unit 110 to capture the condition of the monitored infant and send the condition of the monitored infant to the parent unit 130 wirelessly, and controlling the baby unit with the first control signal of the parent unit 130, the user can control the baby unit when an abnormal condition or a suspected abnormal condition occurs, and the user can monitor the infant in a distance and therefore the baby monitor can share the company pressure of the guardian.

In some embodiments of the present disclosure, the baby unit 110 may be configured to only send the first capture-monitoring-data to the parent unit 130. In some embodiments of the present disclosure, the baby unit 110 may be further configured to send the first capture-monitoring-data to the parent unit 130, and control the baby unit 110 when receiving the first control signal sent from the parent unit 130. For example, the baby unit 110 may be configured to send the parent unit 130 the infant's current pictures and voices, etc. The baby unit 110 may be further equipped with a speaker, when the infant cries, the parent unit 130 is capable of sending the first control signal to the baby unit 110, to control the speaker of the baby unit 110 to play songs or the user's real-time voices and so on. For another example, when the infant cannot be found in a current monitoring screen of the baby unit 110, the baby unit 110 is capable of adjusting a direction of a camera to capture the infant's position under the control of the first control signal.

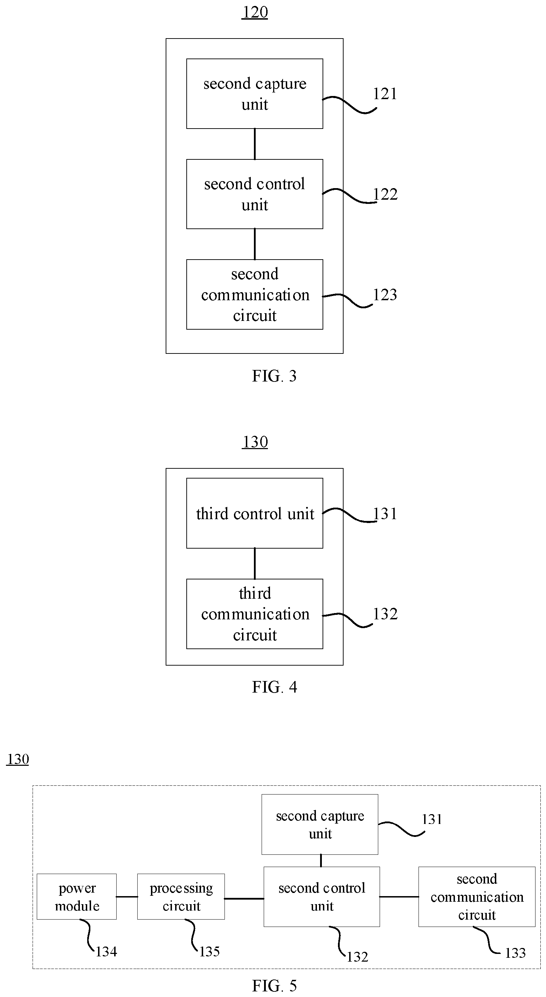

As shown in FIG. 3, FIG. 3 is a block diagram of a door phone of the baby monitor working with a door phone provided by some embodiments of the present disclosure. In some embodiments of the present disclosure, the door phone 120 may be configured to include a second capture unit 121, a second control unit 122 and a second communication circuit 123. The second control unit 122 may be configured to be connected to the second capture unit 121. The second communication circuit 123 may be configured to be connected to the second control unit 122. The second capture unit 121 may be configured to capture the information about the surroundings when the door phone 120 is activated. The second control unit 122 may be configured to process the captured information of the surroundings and generate corresponding second capture-monitoring-data. The second communication circuit 123 may be configured to send the second capture-monitoring-data to the parent unit 130; and/or, the second communication circuit 123 may be configured to receive a second control signal sent from the parent unit 130. The second control unit 122 may be configured to analyze the second control signal and control the door phone 120 based on the analyzed second control signal.

In the above embodiments of the present disclosure, the door phone 120 is capable of capturing the information of the surroundings and sending the information of the surroundings to the parent unit 130, the user can send the second control signal to the door phone 120 using the parent unit 130, and the second control signal may be configured to control the speaker of the door phone 120 to play the audio information of the user. Therefore, the user can communicate with the visitor through the parent unit 130, and improve the convenience of the communication between the user and visitor.

In some embodiments of the present disclosure, when the second capture unit 121 is configured to be a picture capture unit, the second capture-monitoring-data is configured to be picture data; when the second capture unit 121 is configured to be an audio capture unit, the second capture-monitoring-data is configured to be audio data; when the second capture unit 121 is configured to be a picture and audio capture unit, the second capture-monitoring-data is configured to be picture and audio data.

As shown in FIG. 4, FIG. 4 is a block diagram of a parent unit of the baby monitor working with a door phone provided by some embodiments of the present disclosure. In some embodiments of the present disclosure, the parent unit 130 may be configured to include a third communication circuit 132 and a third control unit 131. The third communication circuit may be configured to communicate wirelessly with the first communication circuit 113 of the baby unit 110 and/or the second communication circuit 123 of the door phone 120. The third control unit 131 may be configured to be connected to the third communication circuit 132. The third control unit 131 may be configured to process based on the first capture-monitoring-data sent from the baby unit 110 and/or the second capture-monitoring-data sent from the door phone 120, and generate a processed data; and/or, the third control unit 131 may be configured to generate a corresponding command control signal based on a user command, and send the command control signal to the baby unit 110 and/or the door phone 120 through the third communication circuit 132.

In some embodiments of the present disclosure, the parent unit 130 may be configured to be a machine with a screen, the parent unit 130 may be capable of generating the corresponding command in response to the user's touch operation on the screen. Alternatively, the parent unit 130 may also be configured to have a physical control element, such as a button, the user can control the parent 130 to generate various control signals through the button.

In some embodiments of the present disclosure, each of the first capture unit 111 and the second capture unit 121 may be an audio capture unit, a picture capture unit, or an audio and picture capture unit.

In some embodiments of the present disclosure, in response to the first capture unit 111 and the second capture unit 121 being the audio capture units, the parent unit 130 may further include a speaker. The speaker is connected to the third control unit 131, to play the processed data in audio format. Alternatively, in response to the first capture unit 111 and the second capture unit 121 being the picture capture units, the parent unit 130 may further include a screen. The screen is connected to the third control unit 131, to play the processed data in picture format. Alternatively, in response to the first capture unit 111 and the second capture unit 121 being the audio and picture capture units, the parent unit 130 may further include a speaker and a screen. The speaker and the screen are connected to the third control unit 131, to play the processed data in picture format and audio format.

In some embodiments of the present disclosure, the third communication circuit 132 of the parent unit 130 may be further configured to preferentially receive the second capture-monitoring-data transmitted from the door phone 120 based on a priority level. The third control unit 131 of the parent unit 130 may be further configured to preferentially process the second capture-monitoring-data transmitted from the door phone 120 based on the priority level; that is, in a default state, the door phone 120 is not activated, the parent unit 130 has the capability to receive the first capture-monitoring-data sent by the baby unit 110; when the door phone 120 is activated, the parent unit 130 may be switched to receive the second capture-monitoring-data sent from the door phone 120, and has the capability to communicate with the door phone 120 to make the door phone 120 to receive the second control signal sent from the parent unit 130. In some embodiments of the present disclosure, the third communication circuit 132 of the parent unit 130 may also be configured to receive the second capture-monitoring-data sent by the door phone 120 and the first capture-monitoring-data sent by the baby unit 110 when the door phone 120 is activated, and have the capability to send the second control signal to the door phone 120 and send the first control signal to the baby unit 110.

In the above embodiments of the present disclosure, by preferentially receiving the second capture-monitoring-data and preferentially analyzing the second capture-monitoring-data, and so on, the user can timely access to information of the visitor, and communicate with the visitor.

In some embodiments of the present disclosure, each of the first communication circuit 113, the second communication circuit 123, and the third communication circuit 132 can be a Bluetooth communication circuit, a Near Field Communication (NFC) circuit, a Wi-Fi communication circuit, or a Zigbee communication circuit. For example, the first communication circuit 113, the second communication circuit 123, and the third communication circuit 132 can all be Bluetooth communication circuits. Alternatively, the first Communication circuit 113, the second communication circuit 123 and the third communication circuit 132 may respectively be a Bluetooth communication circuit, a NFC circuit, a Wi-Fi communication circuit, etc., which is not limited in the present disclosure.

In some embodiments of the present disclosure, the baby monitor 100 working with a door phone may be configured to include the plurality of baby units 110. The parent unit 130 may be configured in a cycle mode or a selection mode, when the parent unit 130 is configured in the cycle mode, the parent unit 130 cyclically and successively receives and processes the corresponding first capture-monitoring-data sent from each baby unit 110; when the parent unit 130 is configured in the selection mode, the parent unit 130 receives and processes the corresponding first capture-monitoring-data sent from the selected baby unit 110.

In the above embodiments of the present disclosure, by monitoring the plurality of infants with one parent unit 130, the user's monitoring pressure can be further reduced; in a condition of monitoring a plurality of infants, reasonable distribution of time for monitoring each infant is possible to be realized by choosing the cycle mode or the selection mode.

For example, when the parent unit 130 is configured in the cycle mode, the parent unit 130 may cyclically play the audio and/or pictures captured by each baby unit 110 in sequence, audio and/or pictures captured by each baby unit 110 can be played on the parent unit 130 for a preset duration; audio and/or pictures captured by next baby unit 110 can be played on the parent unit 130 after the preset duration. The preset duration of each baby unit 110 can be configured to be the same, or an appropriate preset duration can be configured for each baby unit 110 in advance, for example, different preset duration can be configured according to the age of each infant, etc., when the parent unit 130 receives the first capture-monitoring-data sent from a current baby unit 110, the parent unit 130 may send the first control signal to the current baby unit 110, when the parent unit 130 sends the first control signal to the current baby unit 110, the duration of the audio and/or pictures sent from the current baby unit 110 can be extended, for example, when the user finds that the condition of the infant corresponding to the current baby unit 110 is abnormal, the first control signal can be sent to the current baby unit 110 through the parent unit 130 to control the parent unit 130 not to play the audio and/or pictures captured by the next baby unit 110; that is, the condition of the current infant can be continuously observed on the parent unit 130, and continue to switch when the condition of the current infant is confirmed to be normal, which means the audio and/or pictures captured by the next baby unit 110 may be played on the parent unit 130; continuing switching or stopping switching may be realized through the first control signal output by the parent unit 130.

Referring to FIG. 5, FIG. 5 is a block diagram of the door phone of the baby monitor working with a door phone provided by a second embodiment of the present disclosure. In some embodiments, the door phone 120 may further include a processing circuit 135, which is connected between the power module 134 of the door phone 120 and the second control unit 122 thereof. The processing circuit 135 may be configured to receive the trigger signal and cause the circuit between the power module 134 and the second control unit 122 conducting based on the trigger signal so that the second control unit 122 obtains power for operation. The processing circuit 135 may be further configured to keep the circuit between the power module 134 and the second control unit 122 conducting during a preset time after receiving the trigger signal to keep the door phone 120 working, and after the preset time, disconnect the circuit between the power module 134 and the second control unit 122 for power saving.

The aforesaid embodiments, by using the processing circuit 135, keep the door phone 120 working for the preset time after receiving the trigger signal, that is, the power module 134 only supplies power to the second control unit 122 when the processing circuit 135 receives the trigger signal and the preset time after that, at other times, the door phone 120 does not consume the power of the power module 134, therefore it is capable of greatly improving the endurance of the door phone 120 and achieve power saving.

In some embodiments of the present disclosure, the door phone 120 may further include a sensing circuit (not shown) which may be connected to the processing circuit 135 and is capable of generating the trigger signal, causing the processing circuit 135 to make the circuit between the power module 134 and the second control unit 122 conducting so that the second control unit 122 obtains power to work. The sensing circuit may be a heat sensing circuit (generating the trigger signal after sensing human heat), a vibration sensing circuit (generating the trigger signal after sensing vibration), or an infrared sensing circuit (generating the trigger signal based on infrared feedback), etc., which is not limited here; generating trigger signal through sensing, when sensing appearance of visitor with illegal purposes who do not ring the doorbell, the guardian can promptly know the environment information outside the door. In the aforesaid embodiments, the door phone can automatically communicate with the parent unit when the visitor comes, therefore security improving can be further achieved.

In some embodiments of this disclosure, after the processing circuit 135 makes the circuit between the power module 134 and the second control unit 122 conduct based on the trigger signal so that the second control unit 122 obtains power for operation, the door phone 120 captures the information about the surroundings and sends the information about the surroundings to the parent unit 130.

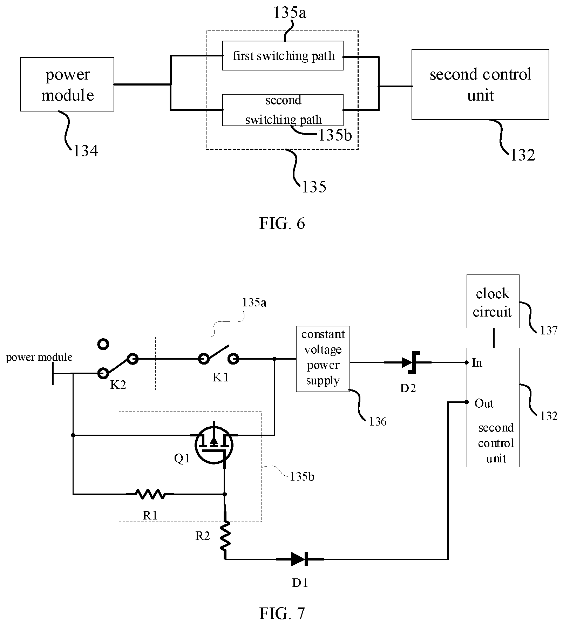

Referring to FIG. 6, FIG. 6 is a block diagram of a processing circuit in the door phone of the baby monitor working with a door phone provided by some embodiments of the present disclosure. In some embodiments of the present disclosure, the processing circuit 135 may include a first switching path 135a and a second switching path 135b. The first switching path 135a may be connected between the power module 134 and the second control unit 122, wherein the first switching path 135a may include a first switch (not shown), for receiving the trigger signal from externalities; in response to receiving the trigger signal, the first switch is switched on causing the first switching path 135a to be conducting, and the power module 134 provides power to the second control unit 122; in response to non-receipt of the trigger signal, the first switch is switched off causing the first switching path 135a to be cut-off. The second switching path 135b is connected between the power module 134 and the second control unit 122, the second switching path 135b may include a second switch (not shown), and a control terminal of the second switch may be further connected to the second control unit 122. After the second control unit 122 receiving power from the first switching path 135a, provides a maintaining-voltage-signal to the control terminal of the second switching path 135b during the preset time and causes the second switching path 135b conducting, and keeps the second switching path 135b being conducting during the preset time, and stops providing the maintaining-voltage-signal to the control terminal of the second switch after the preset time to cut off the second switching path 135b.

In some embodiments of the present disclosure, the first switch may be a mechanical switch or a controllable semiconductor switch for achieving conduction or cut-off in response to the trigger signal. The second switch may be a controllable semiconductor switch, etc., for achieving maintaining conduction under the control of the maintaining-voltage-signal output by the second control unit 122.

Referring to FIG. 7, FIG. 7 is a schematic diagram of a partial circuit structure in the door phone of the baby monitor working with a door phone provided by some embodiments of the present disclosure. In some embodiments of the present disclosure, the second control unit 122 may further include a power input terminal In and a maintaining-voltage-signal output terminal Out. The power input terminal In may be connected to the power module 134 through the first switching path 135a and the second switching path 135b respectively. The maintaining-voltage-signal output terminal Out may be connected to the control terminal of the second switch; when the power input terminal receives power from the first switching path 135a, the maintaining-voltage-signal output terminal provides the maintaining-voltage-signal to the control terminal of the second switching path 135b during the preset time, to cause the second switching path 135b to be conducting, and to keep the second switching path 135b conducting in the preset time, and stops providing the maintaining-voltage-signal to the control terminal of the second switch after the preset time, to cut off the second switching path 135b.

The door phone 120 may have a doorbell button, the visitor can control the doorbell key to generate the trigger signal; referring to FIG. 7, taking the first switch as a mechanical switch and the second switch as a P-MOSFET for example, when the visitor presses the doorbell button, the first switch is switched on, that is, the trigger signal is generated. The power input terminal In of the second control unit 122 is connected to the power module 134 through the first switching path 135a for obtaining power. The second communication circuit 123 and the second capturing circuit are also connected to the power module 134 through the second control unit 122 and the second switching path 135b for obtaining power, therefore, the door phone 120 sends the information about the surroundings to the parent unit 130; after the power input terminal In obtaining power, the second control unit 122 generates the maintaining-voltage-signal which is configured to be at a low potential through the maintaining-voltage-signal output terminal Out to enable the second switch to be conducting, and the second control unit 122 is connected to the power module 134 through the second switching path 135b for obtaining power, and the door phone 120 is continuously in operating mode. After the preset time, the second control unit 122 generates the maintaining-voltage-signal which is configured to be at a high potential through the output terminal Out for turning off the second switch, and then the door phone 120 loses power and exits the operating mode.

In some embodiments of the present disclosure, the second control unit 122 may be further connected to the first switch for obtaining the trigger signal. Therefore, in response to the continuous trigger signal received by the processing circuit 135, such as the doorbell button is continuously pressed, the second control unit 122 may output the maintaining-voltage-signal for the preset time when the trigger signal finishes, which causes the second switching path 135b to be conducting, and then the second control unit 122 obtains power through the second switching path 135b when the first switching path 135a is disconnected.

Continue with FIG. 7, the second switch may be a P-MOSFET, and the control terminal of the second switch is configured to be connected to the power module 134 through a first resistor R1, and is configured to be connected to the maintaining-voltage-signal output terminal Out through the second resistor R2 and a diode D1. Therefore, when the maintaining-voltage-signal output terminal Out generates a maintaining-voltage-signal which is configured to be at low potential, voltage is divided by the first resistor R1 and the second resistor R2, so that the voltage of the control terminal is decreased, and the second switch is switched on; when the maintaining-voltage-signal output terminal Out generates a maintaining-voltage-signal which is configured to be at the high potential, all the voltage of the power module 134 is applied to the first resistor R1 because the diode D1 disconnects the circuit between the maintaining-voltage-signal output terminal Out and the control terminal of the second switch, causing the increasement of the voltage of the control terminal of the second switch, and then the second switch is disconnected.

Continuing to refer to FIG. 7, in some embodiments, the processing circuit 135 may further include a constant voltage power supply 136. The second control unit 122 is configured to be connected to the first switching path 135a and the second switching path 135b through the constant voltage power supply 136, and the constant voltage power supply 136 can improve the stability of the power received by the second control unit 122. In some embodiments, the processing circuit may further include a one-way conductive component, which connected between a voltage stabilizer and the second control unit 122 to prevent current from flowing from the second control unit 122 to the voltage stabilizer. The one-way conductive component may be a diode D2 or a combination of other components, such as a controllable semiconductor switch, etc., which is not limited here.

In some embodiments, the door phone 120 may further include a clock circuit 137. The clock circuit 137 is connected to the second control unit 122, to allow the second control unit 122 to calculate time, and thus maintains the second switching path 135b on for the preset time. The clock circuit 137 may be a crystal oscillator.

In some embodiments, the door phone 120 may further include a main switch K2, specific selection of the main switch K2 is not limited in the present disclosure. The main switch K2 is configured to disconnect the door phone 120 from the power module 134.

Those skilled in the art will recognize that the device and method can be practiced with modification and alteration within the spirit and scope of the appended claims. The description is thus to be regarded as illustrative instead of limiting.

## Claims

1. A baby monitor working with a door phone, **characterized by** comprising:
a parent unit;
at least one baby unit, wherein each of the at least one baby unit is configured to communicate wirelessly with the parent unit, and is configured to capture instant status of a monitored infant and send the instant status of the monitored infant to the parent unit; and
a door phone, capable of realizing wireless communication with the parent unit, wherein the door phone is configured to be activated based on a trigger signal to capture information about the surroundings, and is configured to send the captured information about the surroundings to the parent unit.

2. The baby monitor working with a door phone according to claim 1,
wherein each baby unit comprises:
a first capture unit;
a first control unit, connected to the first capture unit; and
a first communication circuit, connected to the first control unit;
wherein the first capture unit is configured to capture the instant status of the monitored infant, the first control unit is configured to process the captured instant status of the monitored infant and generate corresponding first capture-monitoring-data, and the first communication circuit is configured to send the first capture-monitoring-data to the parent unit; and/or
wherein the communication circuit is configured to receive a first control signal sent by the parent unit and the first control unit is configured to analyze the first control signal and control the baby unit based on the analyzed first control signal.

3. The baby monitor working with a door phone according to claim 2,
wherein the door phone comprises:
a second capture unit;
a second control unit, connected to the second capture unit; and
a second communication circuit, connected to the second control unit;
wherein the second capture unit is configured to capture the information about the surroundings when the door phone is activated, the second control unit is configured to process the captured information of the surroundings and generate corresponding second capture-monitoring-data, and the second communication circuit is configured to send the second capture-monitoring-data to the parent unit; and/or
wherein the second communication circuit is configured to receive a second control signal sent from the parent unit, and the second control unit is configured to analyze the second control signal and control the door phone based on the analyzed second control signal.

4. The baby monitor working with a door phone according to claim 3,
wherein the parent unit comprises:
a third communication circuit, configured to communicate wirelessly with the first communication circuit of the baby unit and/or the second communication circuit of the door phone; and
a third control unit, connected to the third communication circuit;
wherein the third control unit is configured to process based on the first capture-monitoring-data sent from the baby unit and/or the second capture-monitoring-data sent from the door phone, and generates a processed data; and/or
wherein the third control unit is configured to generate a corresponding command control signal based on a user command, and send the command control signal to the baby unit and/or the door phone through the third communication circuit.

5. The baby monitor working with a door phone according to any one of claims 1-4,
wherein each of the first capture unit and the second capture unit is an audio capture unit, a picture capture unit, or and audio and picture capture unit.

6. The baby monitor working with a door phone according to claim 5,
wherein in response to the first capture unit and the second capture unit being the audio capture units, the parent unit further comprises a speaker, the speaker being connected to the third control unit to play processed data in audio format; or
wherein in response to the first capture unit and the second capture unit being the picture capture units, the parent unit further comprises a screen, the screen being connected to the third control unit to play processed data in picture format; or
wherein in response to the first capture unit and the second capture unit being the audio and picture capture units, the parent unit further comprises a speaker and a screen, the speaker and the screen being connected to the third control unit to play processed data in picture format and audio format.

7. The baby monitor working with a door phone according to claim 4,
wherein the third communication circuit of the parent unit is further configured to preferentially receive the second capture-monitoring-data transmitted from the door phone based on a priority level; and
wherein the third control unit of the parent unit is further configured to preferentially process the second capture-monitoring-data transmitted from the door phone based on the priority level.

8. The baby monitor working with a door phone according to claim 4,
wherein each of the first communication circuit, the second communication circuit, and the third communication circuit is a Bluetooth communication circuit, a Near Field Communication circuit, a Wi-Fi communication circuit, or a Zigbee communication circuit.

9. The baby monitor working with a door phone according to claim 4, comprising a plurality of the baby units;
wherein the parent unit is capable of being configured in a cycle mode or a selection mode, when the parent unit is configured in the cycle mode, the parent unit cyclically and successively receives and processes the corresponding first capture-monitoring-data sent from each baby unit; when the parent unit is configured in the selection mode, the parent unit receives and processes the corresponding first capture-monitoring-data sent from the selected baby unit.

10. The baby monitor working with a door phone according to claim 4,
wherein the door phone further comprises:
a processing circuit, connected between a power module of the door phone and the second control unit thereof, wherein the processing circuit receives the trigger signal, and causes the circuit between the power module and the second control unit to be conducting based on the trigger signal so that the second control unit obtains power for operation; the processing circuit is further configured to keep the circuit between the power module and the second control unit conducting, during a preset time after receiving the trigger signal, to keep the door phone working, and after the preset time, disconnect the circuit between the power module and the second control unit for power saving.

11. The baby monitor working with a door phone according to claim 10,
wherein the processing circuit comprises:
a first switching path, connected between the power module and the second control unit, wherein the first switching path comprises a first switch, for receiving the trigger signal from externalities; in response to receiving the trigger signal, the first switch is switched on causing the first switching path to be conducting, the power module provides power to the second control unit; in response to non-receipt of the trigger signal, the first switch is switched off causing the first switching path to be cut-off;
a second switching path, connected between the power module and the second control unit, wherein the second switching path comprises a second switch, a control terminal of the second switch is further connected to the second control unit, when the second control unit receives power from the first switching path, the second control unit provides a maintaining-voltage-signal to the control terminal of the second switching path during the preset time and causes the second switching path to be conducting, keeps the second switching path conducting during the preset time, and stops providing the maintaining-voltage-signal to the control terminal of the second switch after the preset time, to cut off the second switching path.

12. The baby monitor working with a door phone according to claim 11,
wherein the second control unit further comprises a power input terminal and a maintaining-voltage-signal output terminal;
the power input terminal is connected to the power module through the first switching path and the second switching path respectively; the maintaining-voltage-signal output terminal is connected to the control terminal of the second switch;
when the power input terminal receives power from the first switching path, the maintaining-voltage-signal output terminal provides the maintaining-voltage-signal to the control terminal of the second switching path during the preset time, to cause the second switching path to be conducting, and to keep the second switching path conducting during the preset time, and stops providing the maintaining-voltage-signal to the control terminal of the second switch after the preset time, to cut off the second switching path.

13. The baby monitor working with a door phone according to claim 11,
wherein the processing circuit further comprises:
a constant voltage power supply, wherein the second control unit is connected to the first switching path and the second switching path through the constant voltage power supply.

14. The baby monitor working with a door phone according to claim 13,
wherein the processing circuit further comprises:
a one-way conductive component, connected between a voltage stabilizer and the second control unit, to prevent current from flowing from the second control unit to the voltage stabilizer.

15. The baby monitor working with a door phone according to claim 10,
wherein the door phone further comprises:
a clock circuit, connected to the second control unit.
